# EUROPÄISCHE PATENTSCHRIFT

(11) **EP 3 776 461 B1**
(45) Veröffentlichungstag und Bekanntmachung des Hinweises auf die Patenterteilung: **13.08.2025**
(21) Anmeldenummer: 19719445.9
(22) Anmeldetag: 11.04.2019
(51) Int. Cl.: G06T 7/00

(54) **AUTOMATISCHE ERKENNUNG MANIPULIERTER METALLISCHER GEGENSTÄNDE IN RÖNTGENBILDERN**
AUTOMATIC DETECTION OF MANIPULATED METAL OBJECTS IN X-RAY IMAGES
DÉTECTION AUTOMATIQUE D'OBJETS MÉTALLIQUES MANIPULÉS DANS DES RADIOGRAPHIES

(30) Priorität: 12.04.2018 DE 102018108683
(43) Veröffentlichungstag der Anmeldung: 17.02.2021
(73) Patentinhaber: Smiths Detection Germany GmbH, 65205 Wiesbaden (DE)
(72) Erfinder: BURGER, Karsten, 65205 Wiesbaden (DE)
(74) Vertreter: Klunker IP Patentanwälte PartG mbB
(86) Internationale Anmeldenummer: PCT/EP2019/059254
(87) Internationale Veröffentlichungsnummer: WO 2019/197531

(56) Entgegenhaltungen:
- US-A- 4 539 648
- US-A1- 2011 206 240
- US-A1- 2014 185 755
- US-A1- 2016 084 984

## Beschreibung

Die vorliegende Erfindung betrifft allgemein die zerstörungsfeie Inspektion von Objekten und das Auffinden von darin möglichweise enthaltenen Gegenständen mit Gefahrenpotential. Im Besonderen betrifft die Erfindung die Erkennung von zur Verbergung von Gefahrenstoffen manipulierten an sich ungefährlichen Gegenständen, nämlich Batterie- oder Akkuzellen, die verändert wurden, um darin einen Gefahrenstoff, beispielsweise einen Sprengstoff oder Drogen gegen Auffinden zu verbergen.

### Hintergrund

Die folgende einleitende Beschreibung dient lediglich zum besseren Verständnis der Erfindung und soll keinesfalls als zugestandener Stand der Technik verstanden werden, wenn es nicht ausdrücklich als solcher gekennzeichnet ist.

Es ist bekannt geworden (z.B. C. Endt et al. in "Die Größe ist entscheidend", Süddeutsche Zeitung vom 17. Mai 2017), dass ein an sich gefährlicher organischer Sprengstoff, der in einem an sich ungefährlichen metallischen Gegenstand verborgen ist, in einem Transmissionsbild schwer bis möglicherweise mit hoher Wahrscheinlichkeit nicht erkannt werden kann. Das heißt, Mimese-ähnlich ist der gefährliche Gegenstand "Sprengstoff" im Röntgenbild für die optisch ausgerichtete Analyse von der Umwelt derzeit kaum bis nicht mehr zu unterscheiden. D.h. konkret, dass Sprengstoff bereits in an sich ungefährlichen Batteriezellen oder Ackuzellen eines mobilen elektronischen Geräts verborgen sein könnte.

Im Folgenden wird nur noch von Akkuzellen gesprochen, ohne damit Batterien als Primärzellen auszuschließen. Akkus mobiler Geräte, wie Laptops, sind heute überwiegend Lithium-Ionen-Akkus (hier kurz Lithiumakkus). Um einen Sprengstoff in einer oder mehreren Akkuzellen eines Akku-Packs zu verbergen, wird dazu entweder ein Teil des Inneren oder das gesamte Innere einer oder mehrere Akkuzellen gegen den Sprengstoff ausgetauscht. Dabei wird sichergestellt, dass ein solcher Akku-Pack mit manipulierten oder falschen Akkuzellen das mobile Gerät immer noch für einen Funktionstest ausreichend mit Energie versorgen kann.

Bei der auf Röntgen basierenden Inspektion von Handgepäck an Flughäfen werden überwiegend nur zweidimensionale Röntgenbilder zu inspizierender Gepäckstücke erzeugt. Bei der Inspektion von Gepäck, welches für den Frachtraum eines Flugzeuges bestimmt ist, ist es heute üblich Computertomografieverfahren einzusetzen, mittels derer die Erkennung von Sprengstoffen zuverlässig möglich ist. Inspektionsanlagen an Sicherheitsstellen für die Handgepäckkontrolle, die einer Bedienperson ein zweidimensionales Röntgenbild zeigen, sollen daher für die Erkennung von verborgenen Sprengstoffen verbessert werden.

US 2016 00 84 984 A1 offenbart ein System und Verfahren zum Auffinden von Lithium-Batterien in Inspektionsobjekten. Dies ist dann hinreichend, wenn es lediglich darum geht, die Anwesenheit von Lithium-Batterien oder solchen Batterien, die wie Lithium-Batterien aussehen, festzustellen. Jedoch ist dies keine Lösung, wenn es ausschließlich um das Auffinden manipulierter Akkuzellen geht. Die Anwendung dieses bekannten Systems und Verfahrens würde es erfordern, jedes mobile Gerät mit Akkuzellen näher zu untersuchen, um darin verborgene Sprengmittel auszuschließen, oder die Mitnahme der entsprechenden Mobilgeräte an Bord eines Flugzeugs generell auszuschließen. Beides ist nicht praxistauglich.

US 2011 02 06 240 A1 betrifft ebenfalls das Erkennen potenziell bedrohlicher Gegenstände, die im Innern von Objekten, wie in tragbaren elektronischen Geräten, verborgen sein können, dabei wird ein Inspektionsobjekte einem bildgebenden Verfahren mittels Line-Scanner (LS) oder Computertomograph (CT) unterzogen und 2D-LS- bzw. 3D-CT-Daten des Inspektionsobjekts erhalten. Bei der Analyse der LS- oder CT-Daten soll zunächst z.B. ein näher zu untersuchender Gegenstand, wie z. B. ein Laptop, z.B. in einem Gepäckstück als Inspektionsobjekt erkannt werden, um diesen Gegenstand anschließend durch Erzeugung eindimensionaler Eigenprojektionen der CT-Daten in weiter zu untersuchende Partitionen zu unterteilen. Dabei werden Merkmalvektoren dieser Partitionen und der LS- bzw. CT-Bilddaten benutzt, um Layout-Merkmalvektoren zu erzeugen. Ein oder mehrere Layout-Merkmalvektoren werden dann mit Trainingsdaten für Bedrohungen enthaltende und keine Bedrohungen enthaltenden Gegenständen aus einer Klasse des abgebildeten Gegenstands verglichen, um festzustellen, ob der abgebildete Gegenstand eine Bedrohung enthält.

US 4 539 648 A offenbart ein bildgebendes Röntgeninspektionssystem für Inspektionsobjekte zum Erkennen von landwirtschaftlichem Schmuggelware, die in einem Inspektionsobjekt (z.B. einem Gepäckstück oder einem Paketen) enthalten ist. Dabei soll wahlweise die bildliche Darstellung von Gegenständen mit kreisförmigem Querschnitt verbessert werden, um diese Gegenstände besser von Gegenständen mit rechteckigem Querschnitt unterscheiden zu können. Basierend auf der Voraussetzung, dass die Gegenstände von einem Material umgeben sind, das ein anderes Dichteabsorptionskoeffizientenprodukt aufweist als die Gegenstände, wird vorgeschlagen, ein Gradientenbild der räumlich aufgelösten vom Inspektionsobjekt durchgelassenen Intensität der Röntgenstrahlung zu berechnen, um darauf basierend die Kanten der Gegenständen mit rechteckigem Querschnitt im Röntgenbild zu entfernen.

US 2014/185755 A1 offenbart ein System zum Durchleuchten eines Schuhs bezüglich illegaler Materialien. Das System umfasst eine Röntgenquelle zum Projizieren von Röntgenstrahlen auf den Schuh, eine Detektoranordnung zum Erfassen von Röntgenstrahlen, die den Schuh durchdringen, und mindestens eine Metalldetektorspule zur Erfassung von Metallen in dem Schuh. Das System erzeugt ein Röntgenbild des Schuhs durch Verarbeitung der detektierten Röntgenstrahlen und der von der mindestens einen Metalldetektorspule erhaltenen Daten.

### Zusammenfassung der Offenbarung

Eine Aufgabe der vorliegenden Erfindung ist es, eine Röntgeninspektionsanlage und ein Röntgeninspektionsverfahren vorzuschlagen, vermittels derer die Erkennung von manipulierten, grundsätzlich metallischen Gegenständen, nämlich Akkuzellen oder Batteriezellen, insbesondere Lithiumzellen, in denen ein organischer Gefahrenstoff, beispielsweise ein Sprengstoff, verborgen wurde, verbessert oder zumindest überhaupt ermöglicht wird.

Die Aufgabe wird mit den Merkmalen des Anspruchs 1 gelöst. Weitere Ausführungsbeispiele und vorteilhafte Weiterbildungen sind in den sich jeweils anschließenden abhängigen Ansprüchen definiert. Dabei gelten Merkmale und Details, die im Zusammenhang mit dem erfindungsgemäßen Röntgeninspektionsverfahren definiert sind, selbstverständlich auch im Zusammenhang mit der erfindungsgemäßen Röntgeninspektionsanlage, und jeweils umgekehrt. Daher wird bezüglich der Offenbarung der einzelnen Aspekte wechselseitig Bezug genommen.

Zum Auffinden der erfindungsgemäßen technischen Lösung waren seitens des Erfinders mehrere technische Überlegungen erforderlich.

Üblicherweise hat eine Lithiumzelle eine zylindrische Gestalt mit einem dünnen Mantel aus einer Metallfolie und besteht im Inneren aus dem bekannten Funktionsmaterialien (beispielsweise Aluminium, metallisches Lithiumoxid, einem hochporösen Separator, Kohlenstoff, und Kupfer). Wenn das Innere einer solchen Lithiumzelle manipuliert wird, indem die Zelle ganz oder zum Teil mit einem organischen Sprengstoff gefüllt wird, ruft diese manipulierte Zelle im Vergleich zu einer echten Lithiumzelle ein anderes Röntgenbild hervor. Die Dämpfung für Röntgenstrahlung der echten Lithiumzelle ist aufgrund ihrer überwiegend metallischen Bestandteile höher als die von organischen Materialien, wie einem Sprengstoff. Bei einer manipulierten Zelle wäre damit das Röntgenbild aufgrund des organischen Sprengstoffanteils deutlich anders als das von einer Lithiumzelle erwartet und daher für eine Bedienperson im Röntgenbild als auffällig zu erkennen.

Um die fehlenden Dämpfungseigenschaften einer manipulierten Zelle zu kompensieren, kann sie mit einem wesentlich dickeren Metallmantel derart ausgeführt werden, dass das resultierende auf Transmission basierende Röntgenbild der manipulierten Zelle wie das einer gewöhnlichen Lithiumzelle aussieht. Wird der Metallmantel gleichmäßig dick ausgeführt, d.h. als eine Hülse mit gleichmäßiger Dicke, kann das hervorgerufene Röntgenbild auch in einer Röntgeninspektionsanlage mit mehreren Durchstrahlungsrichtungen (sog. Multiview-Anlage) in allen Blickrichtungen gleich realistisch aussehen. Dies ist problematisch.

Eine derart manipulierte Zelle wird hier als "Fake-Zelle" bezeichnet. Unter einer Fake-Zelle soll hier eine manipulierte Akku- oder Batteriezelle verstanden werden, in der ein der eigentlichen Funktion der Zelle fremdes Material in der Zelle verborgen wurde und die Zelle so manipuliert wurde, dass die Zelle in einem Röntgenbild möglichst wie eine echte Akkuzelle oder Batterie-zelle aussieht.

Der/die Erfinder haben in einem Röntgenbild beim Dämpfungsverlauf oder Intensitätsverlauf detektierter Röntgenstrahlen durch eine Fake-Zelle erkannt, dass für nicht manipulierte Zellen charakteristische Merkmale und besonders für Fake-Zellen charakteristische Anomalie detektiert werden können. Besonders gut geeignet ist ein zu analysierender Dämpfungsverlauf oder Intensitätsverlauf detektierter Röntgenstrahlen, der möglichst quer durch eine Batterie-Zelle, d.h. orthogonal zu ihrer Längsachse, verläuft.

Beispielsweise wurde erkannt, dass die metallische Hülle oder Hülse einer Fake-Zelle in einem Röntgenbild beim Dämpfungsverlauf oder entsprechend im Intensitätsverlauf durch die Fake-Zelle einen charakteristischen Peak an den Rändern der Fake-Zelle hervorruft. Dies resultiert daraus, dass am Zellenrand die metallische Hülle oder Hülse tangential und nicht senkrecht mit Röntgenstrahlen durchstrahlt wird. Dadurch wird am Zellenrand, besonders im von der metallischen Hülle oder Hülse definierten Randbereich die Röntgenstrahlung deutlich stärker gedämpft als im Bereich der Fake-Zelle zwischen den von der metallischen Hülle oder Hülse definierten Randbereiche, da dort jeweils senkrecht im Wesentlichen durch die metallische Hülle oder Hülse, somit durch weniger Metall gestrahlt wird als in den Randbereichen und damit die Röntgenstrahlung effektiv weniger gedämpft wird. Dieser Effekt ist umso signifikanter, je dicker der metallische Zellmantel, d.h. die metallische Hülle oder Hülse, ist. Dies ist genau bei Fake-Zellen der Fall, da die fehlende Dämpfung durch ein organisches Gefährdungsmaterial, wie Sprengstoff, durch mehr Metall im Zellenmantel kompensiert werden soll.

Schließlich hat sich bei der Entwicklung der vorstehend umrissenen Lösung gezeigt, dass ein wesentlicher Teil der Aufgabe auch darin bestand, ein ausreichend robustes Verfahren zur Detektion von Fake-Zellen zu finden. In realen Röntgenbildern treten vielfältige Störungen auf, d.h. die zu analysierenden Zellen liegen nicht ideal freigestellt vor, sondern sind z.B. unterschiedlich gestapelt, Laptopteile und Kabel können die Zellen überlagern, Metallhülsen von Fake-Zellen und echte Zellen können verschiedene Größen aufweisen. Das hier vorgeschlagene Prinzip, das dem entwickelten Detektionsverfahren zugrunde liegt, wird hier anhand idealisierter Beispiele erläutert, insofern könnten die gezeigten Röntgenbilder und Zeichnungen für sich betrachtet irreführend sein, da die jeweils analysierten Zellen "frei liegen".

Es sei angemerkt, dass das erfindungsgemäße Prinzip nicht auf das Auffinden von Fake-Zellen, die Sprengstoff enthalten, beschränkt ist. Vielmehr ist das Prinzip zum Auffinden von jeglichen manipulierten metallischen Gegenständen anwendbar, in denen ein organisches Material verborgen wurde. Bei dem organischen Material kann es sich beispielsweise auch um Drogen handeln. Im Folgenden soll daher der Begriff "Fake-Zelle(n)" nicht einschränkend verstanden werden, sondern soll allgemein als Stellvertreter für jegliche Art von nach demselben Prinzip manipuliertem Fake-Gegenstand gelten.

Der Kerngedanke der Erfindung liegt darin, die vorstehenden Erkenntnisse zum Auffinden von metallischen Fake-Zellen in einem Röntgeninspektionsverfahren, insbesondere in einem Auswerteverfahren zum Auffinden von Fake-Zellen in einem Transmissionsbild eines Inspektionsobjekts, wie beispielsweise einem zweidimensionalen Röntgenbild, einzusetzen.

Ein erster Aspekt der vorliegenden Erfindung betrifft ein Verfahren zum Auffinden eines manipulierten Metallgegenstands, in dem ein nicht-metallischer Stoff verborgen ist, in zweidimensionalen (2D) Transmissionsdaten, insbesondere 2D-Röntgendaten, eines den Gegenstand enthaltenden Inspektionsobjekts. Der Metallgegenstand kann beispielsweise so manipuliert sein, dass der manipulierte Metallgegenstand ein zu einem entsprechenden nicht-manipulierten Metallgegenstand vergleichbares Transmissionsbild, beispielsweise ein 2D-Röntgenbild, hervorruft. Dabei sind 2D-Transmissionsdaten Daten, die bevorzugt mittels einer das Inspektionsobjekt in einer Raumdimension entlang einer zweiten Raumdimension erfolgenden Durchleuchtung und Erfassung der vom Inspektionsobjekt nicht absorbierten Strahlung erfasst wurden. Im Falle von 2D-Röntgendaten sind es die entlang einer Transportrichtung jeweils immer für eine (oder mehrere) Zeile(n) erfassten Dämpfungswerte oder Intensitätswerte für Röntgenstrahlen. Selbstverständlich können 2D-Transmissionsdaten auch aus für Raumelemente des Inspektionsobjekts erfassten dreidimensionalen (3D) Transmissionsdaten abgeleitet und für das hier vorgestellte Verfahren verwendet werden.

Das Verfahren weist die folgenden Schritte auf: Bestimmen eines einen Metallgegenstand enthaltenden Bereichs in den Röntgendaten; Bereitstellen eines Dämpfungsverlaufs für oder Intensitätsverlaufs von erfassten Röntgenstrahlen (mit denen das Inspektionsobjekt durchstrahlt wurde) entlang einer Line durch den Metallgegenstand aus den Röntgendaten; Auswerten, ob der Dämpfungsverlauf oder Intensitätsverlauf in einem vorbestimmten Bereich, beispielsweise an Rändern oder in Randbereichen des Metallgegenstandes, eine charakteristische Anomalie zeigt; und wenn der Dämpfungsverlauf oder Intensitätsverlauf im vorbestimmten Bereich die charakteristische Anomalie zeigt, Auslösen einer Alarmfunktion.

Bevorzugt weist das Bestimmen des den Metallgegenstand enthaltenden Bereichs in den Röntgendaten auf: Bestimmen, dass ein Bereich in den Röntgendaten Metall aufweist, basierend drauf, ob der Bereich im Wesentlichen eine Mindestdämpfung der Röntgenstrahlen verursacht, und/oder darauf, welche Kernladungszahl oder effektive Kernladungszahl (Z-Wert oder Z-effektiv), einem Material in den Röntgendaten zugewiesen ist.

Bevorzugt weist das Bereitstellen des Dämpfungsverlaufs oder des Intensitätsverlaufs entlang der Linie durch den Metallgegenstand aus den Röntgendaten auf: Ermitteln einer Längsrichtung des Metallgegenstands; und Erstellen des Dämpfungsverlaufs oder Intensitätsverlaufs entlang der Linie durch den Metallgegenstand. Bevorzugt wird die Linie so ausgerichtet, dass sie orthogonal zur ermittelten Längsrichtung verläuft.

Bevorzugt weist Auswerten, ob der Dämpfungsverlauf oder entsprechend der Intensitätsverlauf in dem vorbestimmten Bereich eine charakteristische Anomalie zeigt, wenigstens einen der folgenden Schritte (a)-(d) auf. Es ist klar, dass der Intensitätsverlauf im Wesentlichen komplementär zum Dämpfungsverlauf verläuft und somit alle Schritte für den Dämpfungsverlauf dies berücksichtigend entsprechend für den Intensitätsverlauf angewendet werden können.

Schritt (a): Bestimmen, ob der Wert der Dämpfung entlang des Dämpfungsverlaufs vom Rand des Metallgegenstandes bis zur Mitte des Metallgegenstandes zunimmt.

Schritt (b): Bestimmen, ob der Dämpfungsverlauf an den Rändern oder in den Randbereichen des Metallgegenstandes einen Sprung aufweist.

Schritt (c): Bestimmen, ob der Dämpfungsverlauf im Randbereich des Metallgegenstandes ein Dämpfungsmaximum aufweist und ausgehend davon zur Mitte des Metallgegenstandes abnimmt und/oder auf einem im Vergleich zu den Randbereichen niedrigen Niveau verläuft.

Schritt (d): Bestimmen einer ersten Ableitung des Dämpfungsverlaufs nach dem Ort und Bestimmen ob die Ableitung jeweils einen Spitze in den Randbereichen des Metallgegenstandes zeigt.

Im Zusammenhang mit den vorstehend erläuterten Maßnahmen, aber auch für das gesamte vorliegende Dokument, sei angemerkt, dass unter "Randbereich" hier ein Bereich ausgehend vom Rand des Metallgegenstandes in Richtung des Mittelpunkts des Metallgegenstands verstanden wird, wobei der Randbereich bevorzugt von etwa 10% der Strecke ausgehend vom Rand bis zum Mittelpunkt definiert wird.

Der Dämpfungsverlauf oder entsprechend der Intensitätsverlauf als Profilsignale können zum Erkennen oder Detektieren einer charakteristischen Anomalie mit verschiedenen Verfahren ausgewertet werden, z.B. mittels maschinellem Lernen, wobei "künstliche" Wissen aus Erfahrung im System angelegt wird. Im Prinzip erlernt das System anhand präsentierter Beispiele zu erkennender Fake-Zellen Muster und Gesetzmäßigkeiten in den Lerndaten, wobei das Wissen über die Beispiele nach der Lernphase verallgemeinert wird. Im Ergebnis kann das System nicht nur die präsentierten Beispiele erkennen, sondern auch unbekannte, d.h. neue Daten beurteilen. Die Prinzipien des maschinellen Lernens sind dem Fachmann auf diesem Gebiet bekannt und müssen daher hier nicht im Detail erläutert werden.

Bevorzugt weist Auslösen einer Alarmfunktion wenigstens einen der folgenden Schritte (i)-(iii) auf.

Schritt (i): Einblenden des Dämpfungsverlaufs oder des Intensitätsverlaufs sowie der Line, entlang der der Dämpfungsverlauf oder der Intensitätsverlauf vorliegt, in ein Röntgenbild des Inspektionsobjekts.

Schritt (ii): Auslösen einer manuellen Kontrolle des Inspektionsgegenstands.

Schritt (iii): Auslösen eines optischen und/oder akustischen Alarms an einer Inspektionsanlage, an der das Verfahren angewandt wird.

Bevorzugt ist der Metallgegenstand ein Gegenstand mit einer Metallhülse oder Metallhülle. Besonders bevorzugt ist der manipulierte Metallgegenstand eine manipulierte Akkuzelle oder Batteriezelle (Fake-Zelle), beispielsweise ein manipulierte Lithium-Akkuzelle.

Ein zweiter Aspekt der vorliegenden Erfindung betrifft eine Verarbeitungsvorrichtung zur Auswertung von Durchleuchtungsbildern, wobei die Verarbeitungsvorrichtung eine Computereinheit aufweist. Die Computereinheit ist zur Durchführung eines Verfahrens gemäß dem ersten Aspekt der vorliegenden Erfindung eingerichtet.

Bevorzugt weist die Verarbeitungsvorrichtung eine Ausgabeeinheit auf, die eingerichtet ist, eine Alarmfunktion auszuführen.

Bevorzugt weist die Computereinheit eine Kommunikationsschnittstelle auf, mittels der die Computereinheit mit einer oder mehreren Inspektionsanlagen zur zerstörungsfreien Inspektion von Inspektionsobjekten für eine Datenkommunikation vernetzbar ist, um von der einen oder den mehreren Inspektionsanlagen Durchleuchtungsbilder für eine (bevorzugt visuelle) Auswertung vermittels der Datenkommunikation zu empfangen.

Ein dritter Aspekt der vorliegenden Erfindung betrifft eine Inspektionsanlage, die für einen Transport von Inspektionsobjekten durch die Inspektionsanlage, zur Durchführung eines bildgebenden Inspektionsverfahren zur zerstörungsfreien Inspektion der Inspektionsobjekte und zur Bereitstellung von Durchleuchtungsbildern der Inspektionsobjekte an eine Verarbeitungsvorrichtung gemäß dem zweiten Aspekt der vorliegenden Erfindung eingerichtet ist und dazu für eine Datenkommunikation mit der Verarbeitungsvorrichtung verbunden ist.

Ein vierter Aspekt der vorliegenden Erfindung betrifft ein Inspektionssystem mit wenigstens einer Verarbeitungsvorrichtung gemäß dem zweiten Aspekt der vorliegenden Erfindung, die räumlich getrennt mit mindestens einer Inspektionsanlage gemäß dem dritten Aspekt der vorliegenden Erfindung für eine Datenkommunikation verbunden ist, wobei Durchleuchtungsbilder von an der mindestens einen Inspektionsanlage inspizierten Inspektionsobjekten für eine visuelle Auswertung an die Verarbeitungsvorrichtung übertragen werden.

Ein fünfter Aspekt der vorliegenden Erfindung betrifft ein Computerprogrammprodukt mit einem Computerprogramm, das Softwaremittel zur Durchführung eines Verfahrens gemäß dem ersten Aspekt der vorliegenden Erfindung aufweist, wenn das Computerprogramm auf einem Computer, insbesondere auf einer Verarbeitungsvorrichtung gemäß dem zweiten Aspekt der vorliegenden Erfindung ausgeführt wird.

Ein sechster Aspekt der vorliegenden Erfindung betrifft einen Datenträger, der ein Computerprogrammprodukt gemäß dem fünften Aspekt der vorliegenden Erfindung enthält.

Ein siebter Aspekt der vorliegenden Erfindung betrifft einen Datenstrom mit elektronisch lesbaren Steuersignalen, die mit einem programmierbaren Computer derart interagieren können, dass wenn der Computer die elektronisch lesbaren Steuersignale ausführt, der Computer ein Verfahren gemäß dem ersten Aspekt der vorliegenden Erfindung durchführt.

### Bevorzugte Ausführungsbeispiele

Weitere Vorteile, Merkmale und Einzelheiten der Erfindung ergeben sich aus der nachfolgenden Beschreibung, in der unter Bezugnahme auf Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung oder normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Strukturen und Verfahren nicht im Detail gezeigt oder erläutert, um das Verständnis der vorliegenden Beschreibung nicht zu erschweren.
- Figur 1: zeigt ein vereinfachtes Blockschaltbild eines Inspektionssystems mit einer Verarbeitungsvorrichtung zur Auswertung von Durchleuchtungsbildern von Inspektionsobjekten.
- Figur 2: zeigt ein Inspektionssystem mit mehreren (n) Inspektionsanlagen der Figur 1 an einer Kontrollstelle und mehreren (m) Auswertevorrichtungen an einer räumlich getrennt angeordneten Auswertestelle.
- Figur 3: zeigen eine Gegenüberstellung des Dämpfungsverlaufs von Röntgenstrahlen entlang einer Linie durch echte Lithiumzellen (links) und durch manipulierte Lithiumzellen, sogenannte Fake-Zelle, (rechts) zur Veranschaulichung und Erläuterung des hier vorgeschlagenen Prinzips zum Auffinden von Fake-Zellen.
- Figur 4: zeigt ein weiteres Beispiel für den Dämpfungsverlauf entlang einer Linie durch nicht manipulierte Lithiumzellen.
- Figur: 5 zeigt ein weiteres Beispiel für den Dämpfungsverlauf quer durch Fake-Zellen, die in einen Laptop eingebaut sind.
- Figur 6A: zeigt von oben nach unten einen vereinfachten Querschnitt einer nicht manipulierten Lithiumzelle, darunter einen Ausschnitt aus einem 2D-Röntgenbild der Lithiumzelle, darunter den Intensitätsverlauf detektierter Röntgenstrahlen entlang einer Linie durch das Röntgenbild und darunter den Verlauf der Ableitung des Intensitätsverlaufs nach der Ortsvariablen.
- Figur 6B: zeigt von oben nach unten einen vereinfachten Querschnitt zweier neben einander liegender manipulierter Lithiumzelle, d.h. Fake-Zellen, darunter einen Ausschnitt aus einem 2D-Röntgenbild der Fake-Zellen, darunter den Intensitätsverlauf entlang einer Linie durch das Röntgenbild und darunter den Verlauf der Ableitung des Intensitätsverlaufs nach der Ortsvariablen.
- Figur 7: zeigt ein Flussdiagramm eines erfindungsgemäßen Verfahrens zum Auffinden von Fake-Zellen in Inspektionsobjekten.

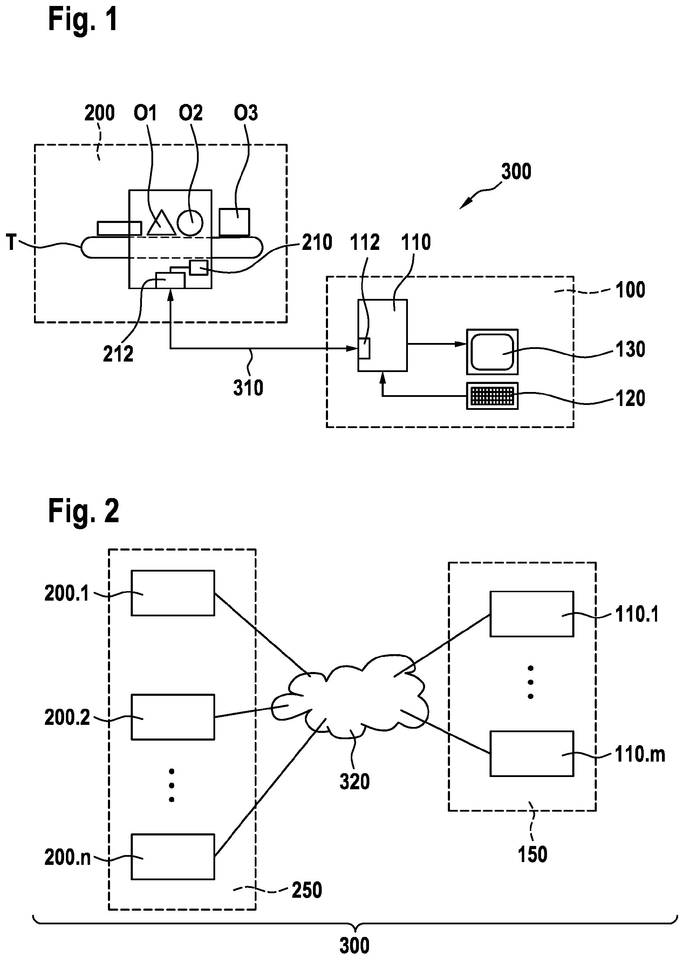

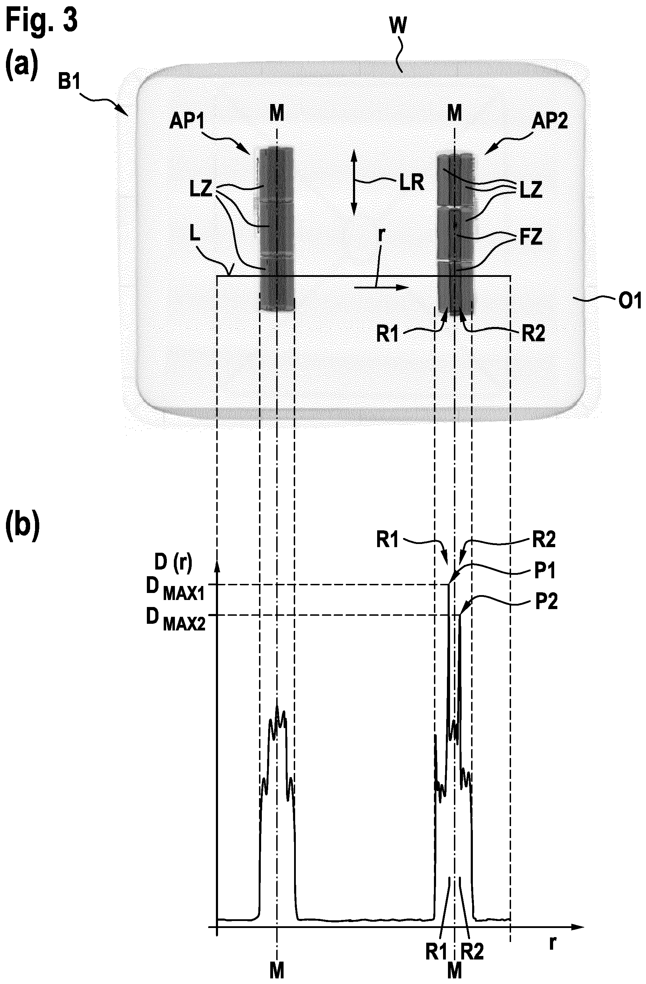

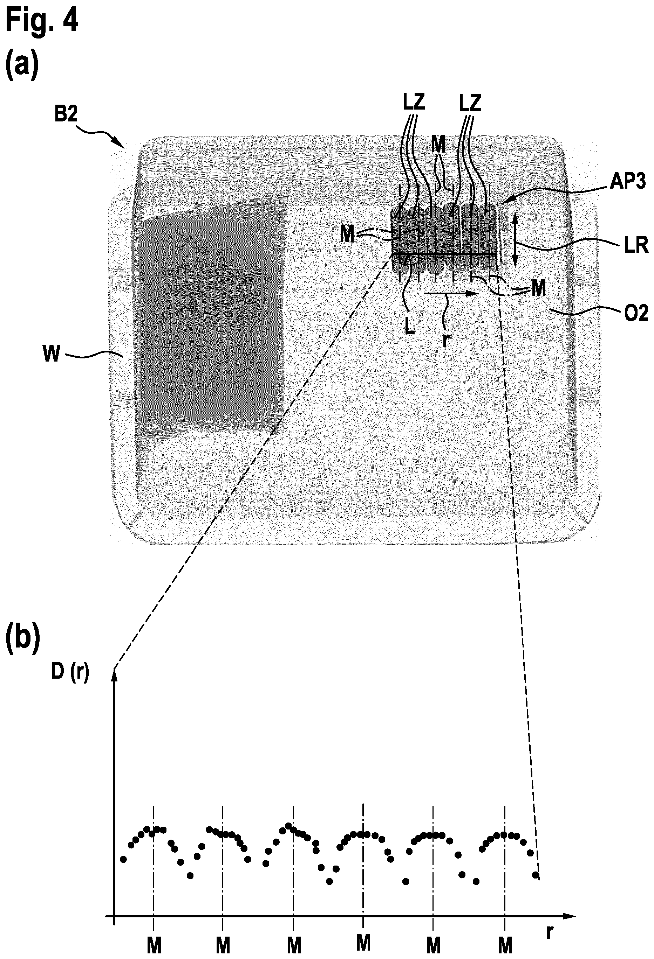

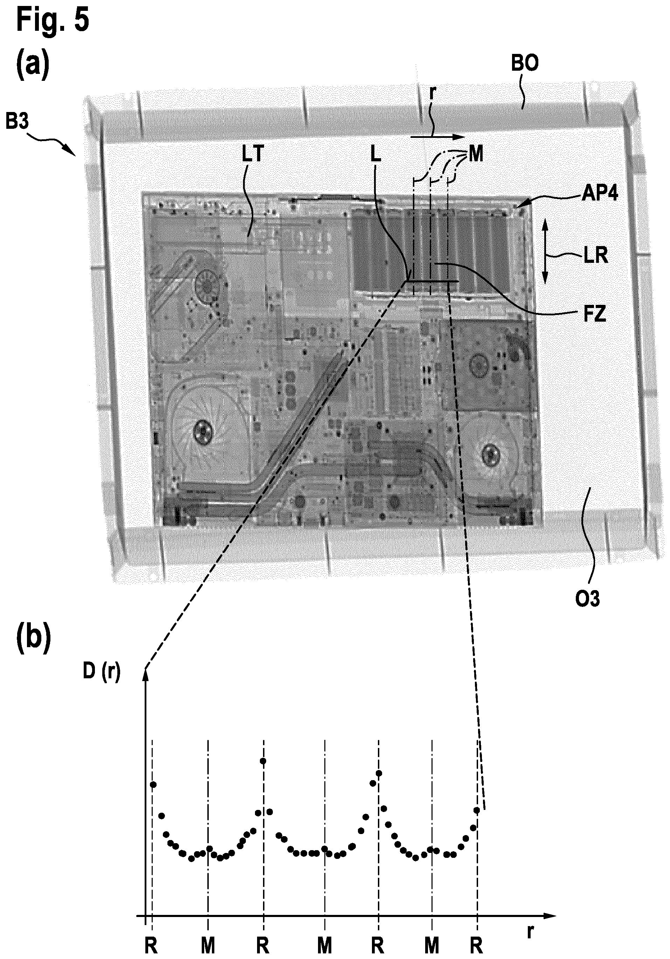

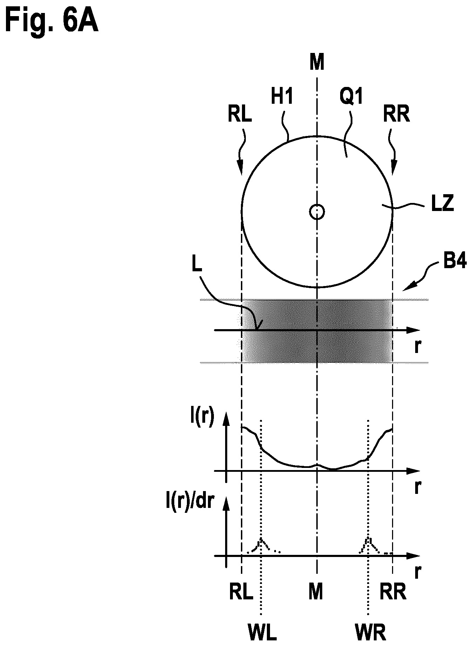

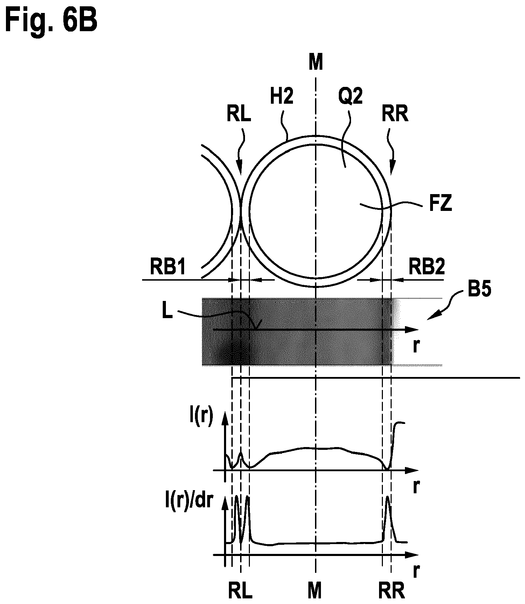

Figur 1 zeigt ein vereinfachtes Blockschaltbild eines Inspektionssystems 300 mit einer Auswertevorrichtung 100 zur Auswertung von Durchleuchtungsbildern B1 (Figur 3), B2 (Figur 4), B3 (Figur 5), B4 (Figur 6A) und B5 (Figur 6B) von Inspektionsobjekten O1, O2, O3. Die Inspektionsobjekte O1, O2, O3 in der Figur 1 sind zur Vereinfachung nur symbolisch dargestellt.

Die Auswertevorrichtung 100 kann als ein Arbeitsplatz für eine Bedienperson im Wesentlichen eine Verarbeitungseinheit 110, eine Eingabeeinheit 120 und eine Ausgabeeinheit 130 aufweisen.

Die Ausgabeeinheit 130 ist eingerichtet, der Bedienperson Durchleuchtungsbilder, beispielsweise die Durchleuchtungsbildern B1 (Figur 3), B2 (Figur 4) und B3 (Figur 5) der Inspektionsobjekte O1, O2, O3 anzuzeigen, um so den Inhalt der Inspektionsobjekte O1, O2, O3 auf die Anwesenheit von Zielgegenständen zu prüfen. Zielgegenstände können Gefahrengegenstände, wie Waffen, Sprengstoff, gefährliche Flüssigkeiten, und/oder Schmuggelware und/oder Drogen etc. sein. Im vorliegenden Kontext geht es besonders um das Auffinden von in an sich ungefährlichen metallischen Gegenständen verborgenen Gefahrenstoffen, besonders Sprengstoffen. Wie bereits an anderer Stelle geschildert, besteht die Möglichkeit, einen an sich ungefährlichen metallischen Gegenstand so zu manipulieren oder falsch nach zu bilden, dass der manipulierte oder falsche Gegenstand (Fake-Gegenstand) in einem zweidimensionalen Röntgenbild ähnlich oder nahezu identisch zu dem nachgebildeten echten, d.h. nicht manipulierten, Gegenstand dargestellt wird. Dies kann entsprechend die Auffindungsrate beeinträchtigen. Um das Auffinden derartiger Fake-Gegenstände zu verbessern oder zu erleichtern, werden hier am Beispiel von manipulierten oder falschen Batterie- oder Akkuzellen geeignete Maßnahmen beschrieben.

Ein wichtiger Teil der Aufgabe war, ein ausreichend robustes Verfahren zu finden, da im realen Bild vielfältige Störungen auftreten können, z.B. können die Zellen unterschiedlich gestapelt sein, Laptopteile und Kabel können überlagern, die Hülsen und Zellen können verschiedene Größen und Typen haben; insofern könnten die Bilder/Zeichnungen für sich betrachtet irreführend sein, da dort die Zellen "frei liegen";
Die Eingabeeinheit 120 in der Figur 1 ist im Wesentlichen eingerichtet, Eingaben der Bedienperson zur Steuerung der Auswertevorrichtung 100 einzugeben. Weiter kann die Bedienperson in Reaktion auf ein angezeigtes Durchleuchtungsbild B1, B2, B3 das Ergebnis der visuellen Auswertung eingeben, wie beispielsweise, dass das Inspektionsobjekt O1, O2, O3 "sicher" ist oder, dass der Inhalt des Inspektionsobjekts O1, O2, O3 weiter überprüft, besonders manuell genauer untersucht werden muss. Auch kann eine genauere Untersuchung automatisch von der Verarbeitungseinheit 110 durch eine Alarmfunktion ausgelöst werden, um beispielsweise in einer genaueren Untersuchung den betroffenen Gegenstand auf Spuren von Sprengstoffen hin zu untersuchen (explosive trace detection, ETD). Eine derartige Maßnahme ist zeitaufwändig und verursacht Kosten und sollte daher nur in Fällen mit begründeter Veranlassung erfolgen müssen.

Die Durchleuchtungsbilder B1 (Figur 3A), B2 (Figur 4a) und B3 (Figur 5A) der Inspektionsobjekte O1, O2, O3 wurden von der Inspektionsanlage 200 (Figur 1) mittels einer bildgebenden Durchleuchtungstechnik erzeugt. Die Inspektionsanlage 200 ist im Ausführungsbeispiel eine Röntgenprüfanlage, wie sie z. B. aus der DE 101 49 254 A1 bekannt ist. Die Röntgenprüfanlage kann eine oder mehrere Strahlungsebenen aufweisen.

Die Inspektionsanlage 200 ist im Wesentlichen für einen Transport der Inspektionsobjekten O1, O2, O3 mittels einer Transportvorrichtung T, beispielsweise einem Transportband, durch die Inspektionsanlage 200 eingerichtet. Im Inneren der Inspektionsanlage 200 werden die Inspektionsobjekte O1, O2, O3 mittels Röntgenstrahlen zerstörungsfrei in an sich bekannter Weise durchleuchtet. Als Ergebnis erzeugt die Inspektionsanlage 200 zweidimensionale Röntgendaten der Inspektionsobjekte O1, O2, O3, aus denen an der Auswertevorrichtung 100 Röntgenbilder erzeugt und auf der Anzeigeeinheit 130 der Bedienperson angezeigt werden können.

Die Auswertevorrichtung 100 ist im Ausführungsbeispiel als Inspektionssystem 300 der Figur 1 räumlich getrennt zur Inspektionsanlagen 200 über eine Netzwerkverbindung 310 für eine Datenkommunikation verbunden. Dazu weisen die Computereinheit 110 eine erste Kommunikationsschnittstelle 112 und die Inspektionsanlage 200 eine zweite Kommunikationsschnittstelle 212 auf, mittels der die Computereinheit 110 mit der gezeigten einen, aber entsprechend auch weiteren Inspektionsanlagen 200 zur zerstörungsfreien Inspektion von Inspektionsobjekten über die Netzwerkverbindung 310 datenkommunikativ vernetzt ist. Über die Netzwerkverbindung 310 werden erfasste Durchleuchtdaten von an der Inspektionsanlage 200 inspizierten Inspektionsobjekten O1, O2, O3 zur Auswertung an die Auswertevorrichtung 100 übertragen. Das Inspektionssystem 300 kann neben mehreren Inspektionsanlagen 200 auch mehrere Auswertevorrichtungen 100 aufweisen, sodass die Arbeitslast der Auswertung der Durchleuchtungsdaten optimal auf die vorhandenen Auswertevorrichtungen 100 verteilt werden kann (ein solches System ist in der Figur 2 gezeigt). Selbstverständlich kann die Auswertevorrichtung 100 grundsätzlich unmittelbar in räumlicher Nähe zu der Inspektionsanlage 200 oder als ein fester Bestandteil der Inspektionsanlage 200 ausgeführt sein.

Figur 2 zeigt ein Inspektionssystem 300 mit mehreren (n) Inspektionsanlagen 200.1, 200.2, ..., 200.n der Figur 1, die an einer Kontrollstelle 250 angeordnet sind, und mehreren (m) Auswertevorrichtungen 100.1, ..., 100.m der Figur 1, die sich an einer räumlich von den Inspektionsanlagen getrennt angeordneten Auswertestelle 150 befinden. Die Inspektionsanlagen 200.1, 200.2, ..., 200.n der Kontrollstelle 250 sind über ein Datennetzwerk 320 mit den Auswertevorrichtungen 100.1, ..., 100.m der Auswertestelle 150 zum elektronischen Datenaustausch in an sich bekannter Weise vernetzt. Selbstverständlich können auch mehrere Kontrollstellen 250 mit der einen oder ebenfalls mehreren Auswertestellen 150 vernetzt sein.

Bei der Kontrollstelle 250 kann es sich beispielsweise um einen Checkpoint am Zugang zu einem Sicherheitsbereich eines Flughafens handeln. Am Checkpoint wird in an sich bekannter Weise das Handgepäck von Flugpassagieren mittels der Inspektionsanlagen 200.1, 200.2, ..., 200.n der Kontrollstelle 250 überprüft. Dabei von einer der Inspektionsanlagen 200.1, 200.2, ..., 200.n erzeugte Durchleuchtungsdaten sind im Ausführungsbeispiel Röntgendaten von beispielsweise einem Gepäckstück als Inspektionsobjekt eines Passagiers. Zur Auswertung z.B. in Bezug auf mögliche Sicherheitsrisiken oder andere Gegenstände von Interesse werden die Durchleuchtungsdaten über das Netzwerk 320 an eine der Auswertevorrichtungen 100.1, ..., 100.m übermittelt. Dort werden aus den Durchleuchtungsdaten u.a. Röntgenbilder B1-B3 erzeugt und von einer Bedienperson visuell geprüft.

Wenn ein Inspektionsobjekt ein elektronisches Mobilgerät mit Batteriezellen oder Akkuzellen enthält, ist die Bedienperson besonders gefordert. Die Bedienperson muss nämlich entscheiden, ob die Batterie- oder Akkuzellen des Mobilgeräts möglicherweise manipuliert wurden und daher zusätzliche zeitintensive und Kosten verursachende Untersuchungen angefordert werden müssen. Wenn sich durch eine effektivere Auswertung der Röntgendaten an der Auswertevorrichtung 100 unnötige zusätzliche Kontrollen vermeiden lassen, können unnötige Verzögerungen an der Kontrollstelle 250 vermieden und so der gesamte Kontrollablauf verbessert werden. Darüber hinaus werden entsprechend zusätzliche Kosten vermieden.

Figur 3 zeigt ein erstes Ausführungsbeispiel für die hier vorgeschlagene Verbesserung für die Auswertung, besonders das Auffinden, von möglichen Fake-Gegenständen in Inspektionsobjekten.

Figur 3 zeigt im oberen Teil (a) ein erstes Röntgenbild B1 einer Wanne W als ein erstes Inspektionsobjekt O1. In der Wanne W befinden sich zwei Akku-Packs AP1, AP2, die jeweils aus 9 Zellen gebildet sind.

Der erste Akku-Pack AP1 besteht aus einer Anordnung von insgesamt 9 Lithiumzellen LZ, von denen jeweils drei in Serie verschaltet sind und die drei Einheiten mit in Serie verschalteten Lithiumzellen zueinander parallelgeschaltet sind.

Der zweite Akku-Pack AP2 ist im Wesentlichen zu dem ersten Akku-Pack AP1 hinsichtlich der Verschaltung der Lithiumzellen identisch aufgebaut, jedoch besteht eine Einheit mit in Serie verschalteten drei Zellen aus drei manipulierten Lithiumzellen, die hier als Fake-Zellen FZ bezeichneten werden. D.h. im Ergebnis hat der zweite Akku-Pack AP2 nur 2/3 der Kapazität des ersten Akku-Packs AP1, ist aber grundsätzlich funktionsfähig. Folglich kann der zweite Akku-Pack AP2 allein durch einen Funktionstest des diesen Akku-Pack AP2 enthaltenden Mobilgeräts nicht erkannt werden.

Wie an anderer Stelle bereits erörtert und in der Figur 3 erkennbar, hat eine echte Lithiumzelle LZ eine zylindrische Gestalt mit einem dünnen Mantel aus einer Metallfolie und besteht im Inneren aus den bekannten Funktionsmaterialien, wie beispielsweise einer Aluminiumelektrode, die mit metallischem Lithiumoxid beschichtet ist und einer Kupferelektrode, die mit Kohlenstoff beschichtet ist, wobei die Lithiumoxidschicht und die Kohlenstoffschicht beide in einem Elektrolyt angeordnet und voneinander mittels eines hochporösen Separators getrennt sind.

Wenn das Innere einer manipulierten Fake-Zelle FZ ganz oder zum Teil mit einem organischen Sprengstoff gefüllt wird, würde eine solche Fake-Zelle FZ im Vergleich zu einer echten Lithiumzelle LZ ein deutlich erkennbar anderes Röntgenbild hervorrufen. Die Dämpfung für Röntgenstrahlung bei der echten Lithiumzelle LZ ist nämlich aufgrund ihrer überwiegend metallischen Bestandteile höher als die Dämpfung einer aus einem organischen Material, wie einem Sprengstoff, bestehenden Füllung, wie es bei der Fake-Zelle der Fall ist. Bei einer Fake-Zelle FK wäre damit das Röntgenbild aufgrund des organischen Sprengstoffanteils deutlich von dem Röntgenbild einer echten Lithiumzelle LZ unterscheidbar und daher für eine Bedienperson im Röntgenbild B1 als auffällig grundsätzlich leicht zu erkennen.

Um die fehlenden Dämpfungseigenschaften einer Fake-Zelle FZ zu kompensieren, kann sie mit einem wesentlich dickeren Metallmantel ausgeführt werden, dessen Materialstärke so eingestellt ist, dass das resultierende auf Transmission basierende Röntgenbild dieser Fake-Zelle FZ wie das einer gewöhnlichen nicht manipulierten Lithiumzelle LZ aussieht.

Wird der Metallmantel gleichmäßig dick ausgeführt, d.h. in Form einer Hülse oder Hülle mit gleichmäßiger Dicke, kann das hervorgerufene Röntgenbild auch in einer Mulitview-Röntgeninspektionsanlage in allen dabei erfassten Blickrichtungen gleich realistisch aussehen. Dies ist problematisch, da Fake-Zellen FZ unerkannt bleiben könnten und mittels solcher Fake-Zellen möglicherweise Sprengstoffe in Sicherheitsbereiche eingeschmuggelt werden könnten.

Der/die Erfinder haben erkannt, dass Fake-Zellen FZ in einem Röntgenbild im Dämpfungsverlauf entlang einer Linie durch die Fake-Zelle FZ eine charakteristische Anomalie aufweisen, die es ermöglicht, automatisch die mögliche Anwesenheit einer Fake-Zelle FZ zu erkennen. Besonders gut ist eine solche Anomalie im Dämpfungsverlauf entlang einer Linie L, die im Wesentlichen quer oder orthogonal zu einer Längsrichtung LR der Fake-Zelle(n) FZ verläuft, zu erkennen.

Der metallische Zellenmantel der Fake-Zelle FZ verursacht nämlich im Röntgenbild B1 im Dämpfungsverlauf entlang der Linie L durch die Fake-Zellen FZ einen charakteristischen Peak P1, P2, der jeweils am linken Rand R1 und am rechten Rand R2 der Fake-Zelle FZ auftritt. Der Peak P1, P2 kommt daher zustande, weil am Zellenrand R1, R2 die Metallhülse oder Metallhülle tangential und nicht senkrecht durchstrahlt wird. Dadurch durchläuft die Röntgenstrahlung am Zellenrand R1, R2 mehr Metall und wird entsprechend deutlich stärker gedämpft als im Bereich der Fake-Zelle zwischen den Zellenrändern R1, R2. Im Bereich zwischen den Zellenrändern R1, R2 wird die Metallhülse oder Metallhülle im Wesentlichen senkrecht und damit effektiv weniger Metall durchstrahlt. Entsprechend wird die Röntgenstrahlung weniger gedämpft. Dieser Effekt und damit die detektierbare Anomalie sind umso signifikanter, je dicker die Metallhülse oder Metallhülle der Fake-Zelle FZ ist.

Damit können Fake-Zellen FZ mittels einer Suche nach der vorstehend beschriebenen Anomalie aufgefunden werden. Für das menschliche Auge ist die Anomalie besonders aufgrund der Bildschirmauflösung schlecht erkennbar und daher bis jetzt auch nicht erkannt worden.

Jedenfalls haben die Erfinder erkannt, dass derartige Anomalie im Vergleich zu einer nicht manipulierten Lithiumzelle gerade bei einer Fake-Zelle FZ auftritt, da dort die fehlende Dämpfung besonders eines darin verborgenen organischen Gefährdungsmaterials, wie einem Sprengstoff, durch mehr Metall im Zellenmantel kompensiert werden muss.

Im unteren Teil (b) der Figur 3 ist die vorstehende Erkenntnis anhand des Dämpfungsverlaufs D(r) entlang der Line L mit der Ortsvariablen r angetragen. Der Dämpfungsverlauf D(r) wird für eine optimale Analyse bevorzugt quer zur Längsrichtung LR der Zellen eines Akkupacks AP1, AP2 untersucht. Es sei angemerkt, dass das hier geschilderte Prinzip aber auch gültig ist, d.h. eine auf eine Manipulation hinweisende Anomalie erkannt werden kann, wenn der Verlauf mit einem Winkel (also schräg) zur Längsrichtung LR untersucht wird.

Jedenfalls ist im unteren Teil (b) der Figur 3 für den linken Akku-Pack AP1 gut zu erkennen, dass der Dämpfungsverlauf D(r) erwartungsgemäß von den Zellenrändern zur Mitte M des Akkupacks AP1 hin zunimmt und von der Mitte M in Richtung Zellenrand abnimmt.

Für die Fake-Zellen FZ des zweiten Akku-Packs AK2 rechts im unteren Teil (b) der Figur 3 ist gut zu erkennen, dass der Dämpfungsverlauf D(r) an den Zellenrändern R1, R2 der Fake-Zellen FZ jeweils einen charakteristischen Peak P1, P2 in jeweiligen lokalen Maximalwerten Dmax1 und Dmax2, d.h. einen deutlichen Sprung, aufweist und danach der Dämpfungsverlauf D(r) zur Mitte M des Akku-Packs AP2 und der Fake-Zelle FZ hin erkennbar abnimmt bzw. erkennbar auf einem deutlich niedrigeren Niveau verläuft. Dies ist gegenüber dem Dämpfungsverlauf D(r) bei der echten Lithiumzellen LZ anormal und wird hier als eine mögliche charakteristische Anomalie zum Erkennen von Fake-Zellen FZ bezeichnet.

In einer ersten Überlegung ausgehend vom Aufbau typischer Fake-Zellen war es ein Ansatz zu versuchen, im Bereich erkannter Akkuzellen Metallanteile aus den Röntgendaten herauszurechnen. Dies hat sich jedoch schon in einfachen Szenen aufgrund von Störungen des vom organischen Material gedämpften Röntgensignals als außerordentlich schwierig herausgestellt. Die hier vorgeschlagene und diskutierte Lösung nutzt genau den Metallanteil einer Fake-Zell, um eine dadurch verursachte Anomalie zu erfassen (Anomalie-Detektion), was auch in schwierigen Szenen funktioniert. Eine für die Detektion besonders schwierige Szenen sind Akkuzellen im eingebauten Zustand in einem elektronischen Gerät, wie einem Laptop, das sich in einer Tasche zusammen mit vielen weiteren Gegenständen befindet.

Die Figuren 4 und 5 zeigen jeweils ein weiters Beispiel des hier vorgeschlagenen Prinzips, daher werden die Figuren 4 und 5 nicht mehr detailliert, sondern nur in den wesentlichen Punkten erläutert.

Im oberen Teil (a) der Figur 4 ein zweites Röntgenbild B2 eine Wanne W als zweites Inspektionsobjekt O2 gezeigt. In der Wanne W befindet sich ein dritter Akku-Pack AP3 mit sechs nebeneinander angeordneten echten, d.h. nicht manipulierten, Lithiumzellen LZ.

Im unteren Teil (b) der Figur 4 ist der Dämpfungsverlauf D(r) für die Röntgenstrahlung entlang der Linie L im oberen teil (a) der Figur 4 durch den dritten Akku-Pack AP3 mit der Ortsvariablen r dargestellt. Deutlich ist der erwartungsgemäße Dämpfungsverlauf D(r) quer durch die sechs Lithiumzellen LZ zu erkennen. Die Dämpfung nimmt jeweils vom Zellenrand zur Zellenmitte M, wo die Röntgenstrahlung am meisten metallisches Zellenmaterial durchlaufen muss, zu und von dort zum Rand hin wieder ab.

Im oberen Teil (a) der Figur 5 ist ein drittes Röntgenbild B3 einer Box BO als drittes Inspektionsobjekt O3. In der Box BO befindet sich als Beispiel für ein Mobilgerät ein Laptop LT, in dem sich ein vierter Akku-Pack AP4 mit 9 nebeneinander angeordneten Akkuzellen befindet. Von den Akkuzellen wurden drei Zellen manipuliert, um im Inneren der Zellen ein organisches Material zu verbergen, diese Zellen sind aufzufindende Fake-Zellen FZ.

Im unteren Teil (b) der Figur 5 ist wieder der Dämpfungsverlauf D(r) für die Röntgenstrahlung entlang der Linie L durch den vierten Akku-Pack AP4 mit der Ortsvariablen r im oberen Teil (a) der Figur 5 quer zur Längsrichtung LR Fake-Zellen FZ dargestellt. Deutlich ist auch hier der erwartungsgemäße Dämpfungsverlauf D(r) quer durch die Fake-Zellen FZ zu erkennen. Die Dämpfung weist an den jeweiligen Zellenrändern R einen Peak auf und nimmt vom jeweiligen Zellenrand R zur jeweiligen Zellenmitte M der jeweiligen Fake-Zelle FZ hin ab und ausgehend von der jeweiligen Mitte M der Fake-Zelle FZ zum Rand R hin wieder zu.

Basierend auf den vorstehend anhand der Figuren 3-5 erläuterten Erkenntnissen sind Fake-Zellen FZ mithilfe einer detektierbaren Anomalie sicher automatisierbar erkennbar.

Figur 6A zeigt von oben nach unten einen vereinfachten Querschnitt Q1 einer nicht manipulierten Lithiumzelle LZ, darunter einen Ausschnitt aus einem 2D-Röntgenbild B4 der Lithiumzelle LZ, darunter den Intensitätsverlauf I(r) entlang der Linie L durch das Röntgenbild B4 und darunter den Verlauf der Ableitung des Intensitätsverlaufs I(r) nach der Ortsvariablen (r).

Die nicht manipulierte Lithiumzelle LZ der Figur 6A besitzt eine dünne Metallhülle H1, während das Innere im Wesentlichen gleichmäßig bis zur Mitte M mit den Funktionsmaterialien der Lithiumzelle LZ mit hohem Metallanteil gefüllt ist. Dadurch ergibt sich ausgehend vom rechten Rand RR oder vom linken Rand RL jeweils zur Mitte M der nicht manipulierten Lithiumzelle LZ ein Intensitätsverlauf I(r) mit zur Mitte hin abnehmenden Intensitätswerten. Da die Dämpfung für die Röntgenstrahlen im Wesentlichen von der Dicke des zu durchlaufenden Materials bestimmt ist und der Querschnitt Q1 kreisförmig ist und damit zur Mitte hin dicker wird, ergibt sich quasi eine typische "Signatur" im Verlauf der ersten Ableitung des detektierten Intensitätsverlaufs I(r) der Röntgenstrahlen. Die erste Ableitung dl(r)/dr des Intensitätsverlaufs I(r) zeigt jeweils an einem linken Wendepunkt WL und einem rechten Wendepunkt WR des Intensitätsverlaufs I(r) eine Spitze, die nicht am Rand oder im Randbereich der Lithiumzelle LZ liegt. Somit können mit den hier vorgestellten Erkenntnissen auch nicht manipulierte Lithiumzellen LZ positiv erkannt oder bestätigt werden.

Figur 6B zeigt im Vergleich zur Figur 6B von oben nach unten einen vereinfachten Querschnitt Q2 zweier neben einander liegender manipulierter Lithiumzelle, d.h. Fake-Zellen FZ, darunter einen Ausschnitt aus einem 2D-Röntgenbild B5 dieser Fake-Zellen FZ, darunter den Intensitätsverlauf I(r) entlang der Linie L durch das Röntgenbild B5 und darunter den Verlauf der Ableitung dl(r)/dr des Intensitätsverlaufs I(r) nach der Ortsvariable (r).

Die manipulierten Fake-Zellen FZ der Figur 6B besitzt eine im Vergleich zur dünnen Metallhülle H1 der Figur 6A dickere Metallhülse H2, während das Innere im Wesentlichen gleichmäßig bis zur Mitte M mit einem in der Fake-Zelle FZ versteckten organischen Material (z.B. Sprengstoff) gefüllt ist. Die Dicke der Metallhülse H2 definiert jeweils einen linken Randbereich RB1 und einen rechten Randbereich RB2.

Wie an anderer Stelle angemerkt, sei hier als Randbereich ein Bereich verstanden, der sich vom Rand RL, RR der Zelle FZ in Richtung der Mitte M der Zelle FZ erstreckt und dessen Dicke maximal etwa 10% der Strecke vom Rand RL, RR zur Mitte M beträgt; diese Definition sie hier grundsätzlich für alle Beispiele gültig.

Bei der Fake-Zelle ergibt sich jeweils im rechten Randbereich RB1 und im linken Randbereich RB2 im Vergleich zu der nicht manipulierten Lithiumzelle LZ der Figur 6A jeweils ein signifikanter Einbruch im Intensitätsverlauf I(r), wobei der Verlauf der Intensität der detektierten Röntgenstrahlen aufgrund der geringeren Dämpfungseigenschaften des organischen Materials zur Mitte M der Fake-Zelle FZ hin nahezu gleichmäßig verläuft, da sich die gesamte (effektive) Dicke der von den Röntgenstrahlen zu durchlaufenden Metallhülse H2 im Wesentlichen kaum verändert. Damit ergibt sich für die Fake-Zelle FZ in der ersten Ableitung der Intensität I(r) eine signifikant andere Signatur. Besonders signifikant sind dabei die deutlich erkennbaren Spitzen in den Randbereichen RB1, RB2, die sich im Vergleich zu den Spitzen an den Wendepunkten WL, WR in Figur 6A am Rand der Zelle und damit deutlich im Randbereich der Zelle befinden, während die Wendepunkte eindeutig näher an der Mitte einer nicht manipulierten Lithiumzelle LZ liegen.

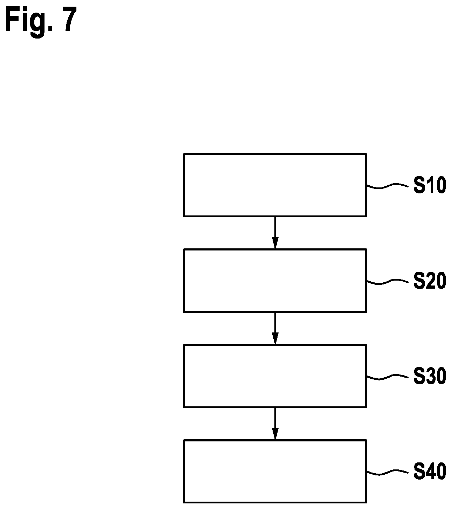

Figur 7 zeigt ein Flussdiagram eines Verfahren zum Auffinden eines manipulierten Metallgegenstands, wie einer Fake-Zelle FZ der Figuren 3A und 5A, in dem ein nicht-metallischer Stoff, beispielsweise Sprengstoff verborgen ist, in zweidimensionalen Röntgendaten eines den Metallgegenstand FZ enthaltenden Inspektionsobjekts O1 oder O3. Dazu weißt das Verfahren die folgenden Schritte auf.

Einen Schritt S10 mit Bestimmen eines den Metallgegenstand FZ enthaltenden Bereichs in den Röntgendaten. Danach einen Schritt S20 mit Bereitstellen eines Dämpfungsverlaufs I(r) quer durch den Metallgegenstand FZ aus den Röntgendaten (vgl. Figuren 3A-5B). Anschließend einen Schritt S30 mit Auswerten, ob der Dämpfungsverlauf I(r) an Rändern R1, R2 des Metallgegenstandes FZ eine charakteristische Anomalie P1, P2 zeigt (vgl. Figuren 3B, 4B, 5B). Letztlich einen Schritt S40 mit, wenn der Dämpfungsverlauf I(r) an Rändern R1, R2 des Metallgegenstandes FZ die charakteristische Anomalie P1, P2 zeigt, mit Auslösen einer Alarmfunktion.

Die Alarmfunktion kann wenigstens einen der folgenden Schritte aufweist:
(i) Einblenden des Dämpfungsverlaufs I(r) sowie der Line, entlang der der Dämpfungsverlauf I(r) vorliegt, in ein Röntgenbild B1, B2, B3 des Inspektionsgegenstands O1, O2, O3, um einer Bedienperson eine besser visuelle Auswertung zu ermöglichen;
(ii) Auslösen einer manuellen Kontrolle des Inspektionsgegenstands O1, O2, O3, dazu kann die Anlage automatisch so gesteuert werden, dass das betroffene Inspektionsobjekt automatisch dem Zugriff Dritter entzogen und zu einer Nachkontrollstelle verbracht wird.
(iii) Auslösen eines optischen und/oder akustischen Alarms an einer Inspektionsanlage 200, an der das Verfahren angewandt wird. Dadurch kann ebenfalls die Aufmerksamkeit der Bedienperson und weiterer Sicherheitskräfte sichergestellt werden.

Abschließend sei angemerkt, dass das erfindungsgemäße Prinzip nicht auf das Auffinden von Fake-Zellen FZ, die Sprengstoff enthalten, beschränkt ist. Vielmehr ist das Prinzip zum Auffinden von jeglichen manipulierten metallischen Gegenständen anwendbar, in denen ein organisches Material verborgen wurde. Dabei kann es sich auch beispielsweise um Drogen handeln. Im Folgenden wird daher nicht einschränkend von Fake-Zellen, sondern von Fake-Gegenständen gesprochen.

Der Kerngedanke der Erfindung liegt darin, die vorstehende Erkenntnis zum Auffinden von metallischen Fake-Zellen in einem Röntgeninspektionsverfahren, insbesondere in einem Auswerteverfahren zum Auffinden von Fake-Zellen in einem Transmissionsbild eines Inspektionsobjekts, wie beispielsweise einem zweidimensionalen Röntgenbild, einzusetzen.

## Patentansprüche

1. Verfahren zum Auffinden einer manipulierten Akku- oder Batteriezelle (FZ), in der ein nicht-metallischer Stoff verborgen ist und die so manipuliert wurde, dass ein resultierendes auf Transmission basierendes zweidimensionales Röntgenbild der manipulierten Akku- oder Batteriezelle (FZ) wie das einer entsprechenden nicht-manipulierten Akku- oder Batteriezelle aussieht, in zweidimensionalen Röntgendaten eines die Akku- oder Batteriezelle (FZ) enthaltenden Inspektionsobjekts (O1, O2, O3), wobei das Verfahren von einer Verarbeitungsvorrichtung durchgeführt wird und die folgenden Schritte aufweist:
- (S10) Bestimmen eines eine Akku- oder Batteriezelle enthaltenden Bereichs in den Röntgendaten;
**gekennzeichnet durch**
- (S20) Bereitstellen des Dämpfungsverlaufs (D(r)) für oder Intensitätsverlaufs (I(r)) von erfassten Röntgenstrahlen entlang einer Linie (L) durch die Akku- oder Batteriezelle aus den Röntgendaten;
- (S30) Auswerten, ob der Dämpfungsverlauf (D(r)) oder der Intensitätsverlauf (I(r)) an Rändern (R1, R2) oder in Randbereichen (RB1, RB2) der Akku- oder Batteriezelle, eine charakteristische Anomalie (P1, P2) zeigt; und
- wenn der Dämpfungsverlauf (D(r)) oder der Intensitätsverlauf (I(r)) an den Rändern (R1, R2) oder in den Randbereichen (RB1, RB2) die charakteristische Anomalie (P1, P2) zeigt, (S40) Auslösen einer Alarmfunktion.

2. Verfahren nach Anspruch 1, wobei (S10) Bestimmen des die Akku- oder Batteriezelle enthaltenden Bereichs in den Röntgendaten aufweist:
- Bestimmen, dass ein Bereich in den Röntgendaten Metall aufweist, basierend drauf, ob der Bereich eine Mindestdämpfung der Röntgenstrahlen verursacht, und/oder darauf, welche Kernladungszahl oder effektive Kernladungszahl einem Material in den Röntgendaten zugewiesen ist.

3. Verfahren nach Anspruch 1 oder 2, wobei (S20) Bereitstellen des Dämpfungsverlaufs (D(r)) oder Intensitätsverlaufs (I(r)) entlang der Linie (L) durch die Akku- oder Batteriezelle aus den Röntgendaten aufweist:
- Ermitteln einer Längsrichtung (LR) der Akku- oder Batteriezelle; und
- Erstellen des Dämpfungsverlaufs (D(r)) oder Intensitätsverlaufs (I(r)) für eine Ortsvariable (r) entlang der Linie (L) durch die Akku- oder Batteriezelle, wobei die Linie (L) bevorzugt so eingerichtet wird, dass die Linie (L) orthogonal zur ermittelten Längsrichtung (LR) verläuft.

4. Verfahren nach einem der Ansprüche 1-3, wobei (S30) Auswerten, ob der Dämpfungsverlauf (D(r)) oder entsprechend der Intensitätsverlauf (I(r)) an den Rändern (R1, R2) oder in den Randbereichen (RB1, RB2) eine charakteristische Anomalie (P1, P2) zeigt, wenigstens einen der folgenden Schritte aufweist:
- Bestimmen, ob der Wert der Dämpfung entlang des Dämpfungsverlaufs (D(r)) vom Rand (R1, R2) der Akku- oder Batteriezelle in Richtung der Mitte (M) der Akku- oder Batteriezelle zunimmt;
- Bestimmen, ob der Dämpfungsverlauf (D(r)) an den Rändern (R1, R2) oder in den Randbereichen (RB1, RB2) der Akku- oder Batteriezelle einen Sprung (P1, P2) aufweist;
- Bestimmen, ob der Dämpfungsverlauf (D(r)) in den Randbereichen (RB1, RB2) der Akku- oder Batteriezelle ein Dämpfungsmaximum (Dmax1, Dmax2) aufweist und ausgehend davon zur Mitte (M) der Akku- oder Batteriezelle abnimmt und/oder auf einem im Vergleich zu den Randbereichen (RB1, RB2) niedrigeren Niveau verläuft;
- Bestimmen einer ersten Ableitung des Dämpfungsverlaufs (D(r)) nach dem Ort (r) und Bestimmen ob die Ableitung (D(r)/dr) jeweils eine Spitze in den Randbereichen (RB1, RB2) der Akku- oder Batteriezelle zeigt.

5. Verfahren nach einem der Ansprüche 1-4, wobei (S50) Auslösen einer Alarmfunktion wenigstens einen der folgenden Schritte aufweist:
- Einblenden des Dämpfungsverlaufs (D(r)) oder des Intensitätsverlaufs (I(r)) sowie der Line (L), entlang welcher der Dämpfungsverlauf (D(r)) oder der Intensitätsverlauf (I(r)) vorliegt, in ein Röntgenbild (B1, B2, B3, B4, B5) des Inspektionsgegenstands (O1, O2, O3);
- Auslösen einer manuellen Kontrolle des Inspektionsgegenstands (O1, O2, O3); und
- Auslösen eines optischen und/oder akustischen Alarms an einer Inspektionsanlage (200), an der das Verfahren angewandt wird.

6. Verfahren nach einem der Ansprüche 1-5, wobei die manipulierte Akku- oder Batteriezelle (FZ) ein Gegenstand mit einer Metallhülse (H2) oder Metallhülle ist.

7. Verfahren nach einem der Ansprüche 1-6, wobei die manipulierte Akku- oder Batteriezelle (FZ) eine manipulierte Lithium-Akkuzelle (LZ) ist.

8. Verarbeitungsvorrichtung (110) zur Auswertung von Durchleuchtungsbildern (B1, B2, B3, B23), wobei die Verarbeitungsvorrichtung (110) zur Durchführung eines Verfahrens gemäß einem der Ansprüche 1 bis 7 eingerichtet ist.

9. Verarbeitungsvorrichtung (100) nach Anspruch 8, wobei die Verarbeitungsvorrichtung (110) weiter mit einer Ausgabeeinheit (130) verbunden ist, wobei die Ausgabeeinheit (130) eingerichtet ist, eine Alarmfunktion auszuführen.

10. Verarbeitungsvorrichtung (110) gemäß Anspruch 8 oder 9,
wobei die Verarbeitungsvorrichtung (110) eine Kommunikationsschnittstelle (112) aufweist, mittels welcher die Verarbeitungsvorrichtung (110) mit einer oder mehreren Inspektionsanlagen (200) zur zerstörungsfreien Inspektion von Inspektionsobjekten (O1, O2, O3) für eine Datenkommunikation vernetzbar ist, um von der einen oder den mehreren Inspektionsanlagen (200) Durchleuchtungsbilder (B1, B2, B3) zur visuellen Auswertung vermittels der Datenkommunikation zu empfangen.

11. Inspektionsanlage (200), die für einen Transport von Inspektionsobjekten (O1, O2, O3) durch die Inspektionsanlage (200), zur Durchführung eines bildgebenden Inspektionsverfahren zur zerstörungsfreien Inspektion der Inspektionsobjekte (O1, O2, O3) und zur Bereitstellung von Durchleuchtungsbildern (B1, B2, B3) der Inspektionsobjekte (O1, O2, O3) an eine Verarbeitungsvorrichtung (110) gemäß einem der Ansprüche 8-10 eingerichtet ist und dazu mit der Verarbeitungsvorrichtung (110) für eine Datenkommunikation verbunden ist.

12. Inspektionssystem (300) mit wenigstens einer Verarbeitungsvorrichtung (110; 110.1, ..., 110.m) gemäß einem der Ansprüche 8-10, die räumlich getrennt mit mindestens einer Inspektionsanlage (200; 200.1, 200.2, ..., 200.n) gemäß Anspruch 11 für eine Datenkommunikation verbunden ist, wobei Durchleuchtungsbilder (B1, B2, B3) von an der mindestens einen Inspektionsanlage (200; 200.1, 200.2, ..., 200.n) inspizierten Inspektionsobjekten (O1, O2, O3) für eine visuelle Auswertung an die Verarbeitungsvorrichtung (110; 110.1, ..., 110.m) übertragen werden.

13. Computerprogrammprodukt mit einem Computerprogramm, das Softwaremittel zur Durchführung eines Verfahrens nach einem der Ansprüche 1 bis 7 aufweist, wenn das Computerprogramm auf einem Computer ausgeführt wird.

14. Datenträger mit einem Computerprogrammprodukt gemäß Anspruch 13.

15. Datenstrom mit elektronisch lesbaren Steuersignalen, die mit einem programmierbaren Computer derart interagieren können, dass wenn der Computer die elektronisch lesbaren Steuersignale ausführt, der Computer ein Verfahren nach einem der Ansprüche 1 bis 7 durchführt.

## Claims

1. A method for detecting a tampered accumulator or battery cell (FZ) in which a non-metallic substance is concealed and which has been tampered with such that a resulting transmission-based two-dimensional X-ray image of the tampered accumulator or battery cell (FZ) looks like that of a corresponding non-tampered accumulator or battery cell, in two-dimensional X-ray data of an inspection object (O1, O2, O3) containing the battery cell (FZ), the method being performed by a processing apparatus and comprising the following steps:
- (S10) determining a region containing a battery cell in the X-ray data;
**characterized by**
- (S20) providing the attenuation curve (D(r)) for or intensity curve (I(r)) of detected X-rays along a line (L) through the accumulator or battery cell from the X-ray data;
- (S30) evaluating whether the attenuation curve (D(r)) or the intensity curve (I(r)) shows a characteristic anomaly (P1, P2) at edges (R1, R2) or in edge regions (RB1, RB2) of the accumulator or battery cell; and
- if the attenuation curve (D(r)) or the intensity curve (I(r)) at the edges (R1, R2) or in the edge regions (RB1, RB2) shows the characteristic anomaly (P1, P2), (S40) triggering an alarm function.

2. Method according to claim 1, wherein (S10) determining the area containing the accumulator or battery cell in the X-ray data comprises:
- determining that a region in the X-ray data comprises metal based on whether the region causes a minimum attenuation of X-rays and/or on what nuclear charge number or effective nuclear charge number is assigned to a material in the X-ray data.

3. Method according to claim 1 or 2, wherein (S20) providing the attenuation curve (D(r)) or intensity curve (I(r)) along the line (L) through the accumulator or battery cell from the X-ray data comprises:
- determining a longitudinal direction (LR) of the battery cell; and
- generating the attenuation curve (D(r)) or intensity curve (I(r)) for a location variable (r) along the line (L) through the accumulator or battery cell, wherein the line (L) is preferably configured such that the line (L) is orthogonal to the determined longitudinal direction (LR).

4. Method according to one of claims 1-3, wherein (S30) evaluating whether the attenuation curve (D(r)) or correspondingly the intensity curve (I(r)) shows a characteristic anomaly (P1, P2) at the edges (R1, R2) or in the edge regions (RB1, RB2) comprises at least one of the following steps:
- determining whether the value of the attenuation increases along the attenuation curve (D(r)) from the edge (R1, R2) of the accumulator or battery cell towards the center (M) of the accumulator or battery cell;
- determining whether the attenuation curve (D(r)) exhibits a jump (P1, P2) at the edges (R1, R2) or in the edge regions (RB1, RB2) of the accumulator or battery cell;
- determining whether the attenuation curve (D(r)) has a maximum attenuation (Dmax1, Dmax2) in the edge regions (RB1, RB2) of the accumulator or battery cell and, starting from this, decreases towards the center (M) of the accumulator or battery cell and/or runs at a lower level compared to the edge regions (RB1, RB2);
- determining a first derivative of the attenuation curve (D(r)) according to the location (r) and determining whether the derivative (D(r)/dr) shows a peak in the edge regions (RB1, RB2) of the accumulator or battery cell in each case.

5. Method according to any one of claims 1-4, wherein (S50) triggering an alarm function comprises at least one of the following steps:
- superimposing the attenuation curve (D(r)) or the intensity curve (I(r)) as well as the line (L) along which the attenuation curve (D(r)) or the intensity curve (I(r)) is present into an X-ray image (B1, B2, B3, B4, B5) of the inspection object (O1, O2, 03);
- triggering a manual check of the inspection object (O1, O2, O3); and
- triggering a visual and/or audible alarm at an inspection apparatus (200) at which the method is applied.

6. Method according to any one of claims 1-5, wherein the tampered accumulator or battery cell (FZ) is an object with a metal sleeve (H2) or metal shell.

7. Method according to any one of claims 1-6, wherein the tampered accumulator or battery cell (FZ) is a tampered lithium battery cell (LZ).

8. Processing apparatus (110) for analyzing transmission images (B1, B2, B3, B23), wherein the processing apparatus (110) is configured to perform a method according to any one of claims 1 to 7.

9. Processing apparatus (100) according to claim 8, wherein the processing apparatus (110) is further connected to an output unit (130), wherein the output unit (130) is configured to implement an alarm function.

10. Processing apparatus (110) according to claim 8 or 9,
wherein the processing device (110) has a communication interface (112) by means of which the processing device (110) can be networked with one or more inspection apparatuses (200) for the non-destructive inspection of inspection objects (O1, O2, O3) for data communication in order to receive fluoroscopic images (B1, B2, B3) from the one or more inspection apparatuses (200) for visual evaluation by means of the data communication.

11. Inspection apparatus (200) for transporting inspection objects (O1, O2, O3) through the inspection apparatus (200), for performing an imaging inspection method for non-destructive inspection of the inspection objects (O1, O2, 03) and for providing transmission images (B1, B2, B3) of the inspection objects (O1, O2, O3) to a processing device (110) according to any one of claims 8-10 and for this purpose is connected to the processing device (110) for data communication.

12. Inspection system (300) with at least one processing apparatus (110; 110.1, ..., 110.m) according to one of the claims 8-10, which is spatially separated with at least one inspection apparatus (200; 200.1, 200.2, ..., 200.n) according to claim 11 for data communication, wherein transmission images (B1, B2, B3) of inspection objects (O1, O2, O3) inspected at the at least one inspection system (200; 200.1, 200.2, ..., 200.n) are transmitted to the processing apparatus (110; 110.1, ..., 110.m) for visual evaluation.

13. Computer program product comprising a computer program having software means for implementing a method according to any one of claims 1 to 7 when the computer program is executed on a computer.

14. Data carrier comprising a computer program product according to claim 13.

15. Data stream comprising electronically readable control signals capable of interacting with a programmable computer such that when the computer executes the electronically readable control signals, the computer performs a method according to any one of claims 1 to 7.

## Revendications

1. Procédé de détection d'un accumulateur ou d'une cellule de batterie (FZ) manipulé(e), dans lequel une substance non métallique est dissimulée et qui a été manipulé(e) de telle manière qu'une image radiographique bidimensionnelle par transmission de l'accumulateur ou de la cellule de batterie (FZ) manipulé(e) ressemble à celle d'un accumulateur ou d'une cellule de batterie non manipulé(e), dans des données radiographiques bidimensionnelles d'un objet à inspecter (O1, O2, O3) contenant ladite cellule de batterie (FZ), le procédé étant mis en œuvre par un appareil de traitement et comprenant les étapes suivantes :
- (S10) déterminer une région contenant une cellule de batterie dans les données radiographiques ;
**caractérisé par**
- (S20) fournir la courbe d'atténuation (D(r)) ou la courbe d'intensité (I(r)) des rayons X détectés le long d'une ligne (L) traversant l'accumulateur ou la cellule de batterie à partir des données radiographiques ;
- (S30) évaluer si la courbe d'atténuation (D(r)) ou la courbe d'intensité (I(r)) présente une anomalie caractéristique (P1, P2) aux bords (R1, R2) ou dans les zones de bord (RB1, RB2) de l'accumulateur ou de la cellule de batterie ; et
- si tel est le cas, (S40) déclencher une fonction d'alarme.

2. Procédé selon la revendication 1, dans lequel (S10) comprend :
- déterminer qu'une région dans les données radiographiques contient du métal, en fonction de sa capacité à provoquer une atténuation minimale des rayons X et/ou en fonction du nombre de charges nucléaires ou du nombre effectif de charges nucléaires attribué à un matériau présent dans les données.

3. Procédé selon la revendication 1 ou 2, dans lequel (S20) comprend :
- déterminer une direction longitudinale (LR) de la cellule de batterie ; et
- générer la courbe d'atténuation (D(r)) ou la courbe d'intensité (I(r)) pour une variable de position (r) le long de la ligne (L) traversant l'accumulateur ou la cellule de batterie, ladite ligne (L) étant préférablement configurée de manière orthogonale à la direction longitudinale (LR) déterminée.

4. Procédé selon l'une des revendications 1 à 3, dans lequel (S30) comprend au moins l'une des étapes suivantes :
- déterminer si la valeur de l'atténuation augmente le long de la courbe (D(r)) depuis les bords (R1, R2) vers le centre (M) de l'accumulateur ou de la cellule de batterie ;
- déterminer si la courbe d'atténuation (D(r)) présente un saut (P1, P2) aux bords (R1, R2) ou dans les zones de bord (RB1, RB2) ;
- déterminer si la courbe d'atténuation (D(r)) présente une atténuation maximale (Dmax1, Dmax2) dans les zones de bord (RB1, RB2) et diminue ensuite vers le centre (M) et/ou se situe à un niveau inférieur par rapport auxdites zones ;
- déterminer la dérivée première de la courbe d'atténuation (D(r)) par rapport à la position (r), et évaluer si cette dérivée (D(r)/dr) présente un pic dans les zones de bord (RB1, RB2).

5. Procédé selon l'une des revendications 1 à 4, dans lequel (S50) comprend au moins l'une des étapes suivantes :
- superposer la courbe d'atténuation (D(r)) ou la courbe d'intensité (I(r)), ainsi que la ligne (L) correspondante, sur une image radiographique (B1 à B5) de l'objet à inspecter (O1 à O3) ;
- déclencher une inspection manuelle de l'objet (O1 à O3) ;
- déclencher une alarme visuelle et/ou sonore sur un appareil d'inspection (200) mettant en œuvre le procédé.

6. Procédé selon l'une quelconque des revendications 1 à 5, dans lequel l'accumulateur ou la cellule de batterie (FZ) manipulé(e) est muni(e) d'un manchon ou d'une enveloppe métallique (H2).

7. Procédé selon l'une quelconque des revendications 1 à 6, dans lequel l'accumulateur ou la cellule de batterie (FZ) manipulé(e) est une cellule de batterie au lithium (LZ) manipulée.

8. Appareil de traitement (110) pour l'analyse d'images de transmission (B1 à B23), configuré pour exécuter un procédé selon l'une quelconque des revendications 1 à 7.

9. Appareil de traitement (100) selon la revendication 8, relié à une unité de sortie (130) configurée pour exécuter une fonction d'alarme.

10. Appareil de traitement (110) selon la revendication 8 ou 9, comprenant une interface de communication (112) permettant de le connecter à un ou plusieurs appareils d'inspection (200) pour inspection non destructive, afin de recevoir, via communication de données, des images de fluoroscopie (B1 à B3) pour évaluation visuelle.

11. Appareil d'inspection (200) pour transporter des objets à inspecter (O1 à O3) au travers de l'appareil, effectuer une inspection non destructive par imagerie et fournir des images de transmission (B1 à B3) à un appareil de traitement (110) selon l'une quelconque des revendications 8 à 10, étant à cet effet relié audit appareil.

12. Système d'inspection (300) comprenant au moins un appareil de traitement (110.1 à 110.m) selon l'une des revendications 8 à 10, relié par communication de données à au moins un appareil d'inspection (200.1 à 200.n) selon la revendication 11, les images de transmission (B1 à B3) étant transmises pour évaluation visuelle.

13. Produit programme d'ordinateur comprenant un programme comportant des moyens logiciels pour la mise en œuvre d'un procédé selon l'une quelconque des revendications 1 à 7 lorsqu'il est exécuté sur un ordinateur.

14. Support de données comportant le produit programme d'ordinateur selon la revendication 13.

15. Flux de données comprenant des signaux de commande lisibles électroniquement, aptes à interagir avec un ordinateur programmable de telle manière que l'exécution desdits signaux met en œuvre un procédé selon l'une quelconque des revendications 1 à 7.
